(19) **Europäisches Patentamt / European Patent Office / Office européen des brevets**

(11) **EP 4 765 295 A1**

(12) **EUROPEAN PATENT APPLICATION**
published in accordance with Art. 153(4) EPC

(43) Date of publication:
**24.06.2026 Bulletin 2026/26**

(21) Application number: **24908185.2**

(22) Date of filing: **20.12.2024**

(51) International Patent Classification (IPC):
**H01M 10/058** (2010.01)   **H01M 4/505** (2010.01)
**H01M 4/525** (2010.01)   **H01M 4/587** (2010.01)
**H01M 50/105** (2021.01)   **H01M 10/44** (2006.01)
**C30B 29/22** (2006.01)

(52) Cooperative Patent Classification (CPC):
**H01M 10/052; H01M 4/525; H01M 4/583;
H01M 10/0525; H01M 10/0569; H01M 50/105;**
H01M 2004/027; H01M 2004/028; H01M 2220/20;
Y02E 60/10

(86) International application number:
**PCT/KR2024/020864**

(87) International publication number:
**WO 2025/135903 (26.06.2025 Gazette 2025/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.12.2023 KR 20230190416
18.12.2024 KR 20240190568**

(71) Applicant: **LG Energy Solution, Ltd.
Seoul 07335 (KR)**

(72) Inventors:
• **PARK, Jin Young
Daejeon 34122 (KR)**
• **OH, Seok Jin
Daejeon 34122 (KR)**
• **PARK, Ji Min
Daejeon 34122 (KR)**
• **SUNG, Joo Hwan
Daejeon 34122 (KR)**
• **YOUN, Hee Chang
Daejeon 34122 (KR)**
• **JUNG, Kyung Min
Daejeon 34122 (KR)**

(74) Representative: **Plasseraud IP
104 Rue de Richelieu
CS92104
75080 Paris Cedex 02 (FR)**

(54) **LITHIUM SECONDARY BATTERY, BATTERY PACK, AND ELECTRIC VEHICLE**

(57)   A lithium secondary battery may include an electrode assembly including a positive electrode, an electrolyte, and a battery case including an internal space for accommodating the electrode assembly and the electrolyte. The positive electrode includes a positive electrode active material, and the positive electrode active material includes a lithium nickel-based oxide containing 50 mol% to 70 mol% of nickel among all metals excluding lithium. An electrolyte filling factor (EFF) index defined by Equation 1 is 1.52 to 1.88.

[Equation 1]

$$\mathrm{EFF} = \frac{R_E \times S_U}{N_C}$$

In Equation 1, $R_E$ is a mass of residual electrolyte contained in the lithium secondary battery after activation, $S_U$ is a ratio ($S_E/S_C$) of the volume ($S_E$) of the electrode assembly and the volume ($S_C$) of the lithium secondary battery, and $N_C$ is a capacity when the lithium secondary battery is discharged from 4.4 V to 3.0 V at 0.33 C at 25 °C.

EP 4 765 295 A1

[FIG. 1]

**Description**

TECHNICAL FIELD

Cross-reference to Related Applications

This application claims priority to Korean Patent Application No. 10-2023-0190416, filed on December 22, 2023 and Korean Patent Application No. 10-2024-0190568, filed on December 18, 2024, the disclosures of which are incorporated herein in their entirety by reference.

Technical Field

The present disclosure relates to a lithium secondary battery, and more particularly, to a lithium secondary battery having high energy density and excellent high-temperature lifetime characteristics.

BACKGROUND ART

Lately, there has been a rising demand for high-capacity, high-output, and high-stability secondary batteries, driven by the fact that the application of lithium secondary batteries has rapidly expanded to power storage supply of large-area devices, such as automobiles and power storage systems, as well as power supply of electronic devices such as electrical, electronic, communication, and computer devices. Secondary batteries are drawing attention as an energy source for enhancing environmental friendliness and energy efficiency. Using secondary batteries as an energy source greatly reduces the use of fossil fuels, and no byproduct is generated during the consumption of energy from such secondary batteries.

The lithium secondary batteries generally include a positive electrode containing a positive electrode active material, a negative electrode containing a negative electrode active material, an electrolyte serving as a medium for delivering lithium ions, and a separator. In this case, as the negative electrode active material, a carbon-based active material, a silicon-based active material, or the like may be used, and as the positive electrode active material, a lithium transition metal oxide such as lithium cobalt oxide, lithium nickel oxide, and lithium nickel-cobalt-manganese composite oxide may be used.

Meanwhile, a lithium nickel-cobalt-manganese composite transition metal oxide having a nickel content of at least 80 mol% among metals excluding lithium as a positive electrode active material is mainly being studied for increasing the energy density of a positive electrode. However, when the nickel content in the lithium nickel-cobalt-manganese composite transition metal oxide is increased, the positive electrode active material goes through rapidly collapsing structural stability at high temperatures, causing significant degradation in performance, leading to reduced thermal stability.

To prevent such an issue, an increase in driving voltage is needed to achieve the required energy density when lowering the nickel content in the lithium nickel-cobalt-manganese composite transition metal oxide. Upon this high-voltage driving, electrolyte side reactions at the positive electrode and gas generation inside cells increase.

Accordingly, there is a need to develop a lithium secondary battery exhibiting excellent energy density and thermal stability and permitting a reduction in electrolyte side reactions under the condition of high-voltage driving.

DISCLOSURE OF THE INVENTION

TECHNICAL PROBLEM

An aspect of the present disclosure provides a lithium secondary battery exhibiting excellent high-temperature lifetime characteristics resulting from reduced electrolyte side reactions at high voltage and excellent thermal stability of a positive electrode active material, while achieving high energy density.

TECHNICAL SOLUTION

[1] According to an aspect of the present disclosure, there is provided a lithium secondary battery including an electrode assembly including a positive electrode, a negative electrode, and a separator between the positive electrode and the negative electrode, an electrolyte, and a battery case including an internal space configured to accommodate the electrode assembly and the electrolyte, wherein the positive electrode includes a positive electrode active material, wherein the positive electrode active material includes a lithium nickel-based oxide containing 50 mol% to 70 mol% of nickel among all metals excluding lithium, and an electrolyte filling factor (EFF) index (unit: g/Ah) defined by Equation 1 below is 1.52 to 1.88.

$$[Equation\ 1]$$

$$EFF = \frac{R_E \times S_U}{N_C}$$

In Equation 1 above, $R_E$ [unit: g] is a mass of the electrolyte contained in the lithium secondary battery after activation of the lithium secondary battery, $S_U$ is a ratio ($S_E/S_C$) of a volume ($S_E$) of the electrode assembly and a volume ($S_C$) of the lithium secondary battery, and $N_C$ [unit: Ah] is a capacity when the lithium secondary battery is discharged from 4.4 V to 3.0 V at 0.33 C at 25 °C.

[2] The present disclosure provides the lithium secondary battery according to [1] above, wherein $R_E$ is 70 to 90 g.

[3] The present disclosure provides the lithium secondary battery according to [1] or [2] above, wherein $S_U$ is 0.75 to 0.95.

[4] The present disclosure provides the lithium secondary battery according to any one of [1] to [3] above, wherein $N_C$ is 35 to 50 Ah.

[5] The present disclosure provides the lithium secondary battery according to any one of [1] to [4] above, wherein the lithium nickel-based compound contains 15 mol% of cobalt (Co) or less among all metals except lithium.

[6] The present disclosure provides the lithium secondary battery according to any one of [1] to [5] above, wherein the lithium nickel-based oxide is represented by Formula 1.

[Formula 1]          $Li_{1+a1}[Ni_{x1}Co_{y1}Mn_{z1}M^1_{w1}]O_2$

In Formula 1, $0 \leq a1 \leq 0.5$, $0.5 \leq x1 \leq 0.7$, $0 < y1 \leq 0.15$, $0 < z1 \leq 0.4$, and $0 \leq w1 \leq 0.2$ are satisfied, and $M^1$ is at least one doping element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo.

[7] The present disclosure provides the lithium secondary battery according to any one of [1] to [6] above, wherein the lithium nickel-based oxide is a single particle type particle.

[8] The present disclosure provides the lithium secondary battery according to any one of [1] to [7] above, wherein the lithium secondary battery has a charge cut-off voltage of 4.3 V or greater.

[9] The present disclosure provides the lithium secondary battery according to any one of [1] to [8] above, wherein the negative electrode includes graphite as a negative electrode active material.

[10] The present disclosure provides the lithium secondary battery according to any one of [1] to [9] above, wherein the battery case is a pouch-type battery case.

[11] The present disclosure provides the lithium secondary battery according to any one of [1] to [10] above, wherein a ratio of $R_E$ to $N_C$ ($R_E/N_C$) is 1.5 to 3.

[12] The present disclosure provides the lithium secondary battery according to any one of [1] to [11] above, wherein the volume ($S_E$) of the electrode assembly is from 0.17 L to 1.1 L.

[13] The present disclosure provides the lithium secondary battery according to any one of [1] to [12] above, wherein the volume ($S_C$) of the lithium secondary battery is from 0.23 L to 1.2 L.

[14] The present disclosure provides the lithium secondary battery according to any one of [1] to [13] above, wherein the electrolyte comprises an organic solvent and a lithium salt, and a concentration of the lithium salt is 0.1 M to 3.0 M.

[15] The present disclosure provides the lithium secondary battery according to any one of [1] to [14] above, wherein the lithium secondary battery has a nominal voltage of 3.68 V or greater.

[16] The present disclosure provides a battery pack comprising the lithium secondary battery according to any one of [1] to [15] above.

[17] The present disclosure provides an electric vehicle comprising the battery pack of [16] above as a power source.

ADVANTAGEOUS EFFECTS

According to the present invention, by including nickel in an amount of 50 to 70 mol% among all metals except lithium, structural stability of the positive electrode active material is improved at high temperatures, and thermal stability is excellent, and by appropriately adjusting the weight of the electrolyte remaining after activation depending on the structure and capacity of the lithium secondary battery, an amount of gas generated inside the battery during high-voltage operation may be reduced and appropriate electrolyte impregnability may be secured at the same time. As a result, manufactured lithium secondary batteries, battery packs, and electric vehicles may secure high energy density and high capacity characteristics, and may have excellent life characteristics and high-temperature life characteristics.

BRIEF DESCRIPTION OF THE DRAWINGS

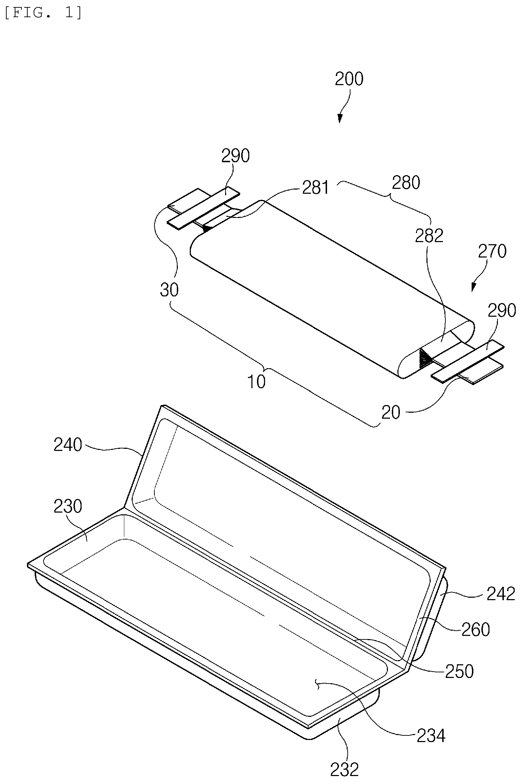

FIG. 1 is an exploded view of a lithium secondary battery according to an aspect of the present disclosure.

BEST MODE FOR CARRYING OUT THE INVENTION

Hereinafter, aspects of the present disclosure will be described in detail.

It will be understood that words or terms used in the present disclosure and claims shall not be construed as being limited to having the meaning defined in commonly used dictionaries. It will be further understood that the words or terms should be interpreted as having meanings that are consistent with their meanings in the context of the relevant art and the technical idea of the disclosure, based on the principle that an inventor may properly define the meaning of the words or terms to best explain the invention.

The terminology used herein is for the purpose of describing particular aspects of the present disclosure only and is not intended to be limiting on the present disclosure. The singular forms are intended to include the plural forms as well, unless the context clearly indicates otherwise.

It will be further understood that the terms "include", "comprise", or "have" used herein, specify the presence of stated features, numbers, steps, elements, or combinations thereof, but does not preclude the presence or addition of one or more other features, numbers, steps, elements, or combinations thereof.

As used herein, the term "single particle type particle" indicates a particle composed of 30 or fewer sub-particles. Each "sub-particle" unit constituting the single particle type particles is referred to as a "nodule". The single particle type particle includes "single particle" formed of a single nodule, and "quasi-single particle" is a composite formed of 30 or fewer nodules.

As used herein, the term "nodule" indicates a distinct, but not separate, sub-particle unit body constituting a single particle and a quasi-single particle, wherein the nodule may be a single crystal lacking any crystalline grain boundaries, or may be a polycrystal in which grain boundaries are not present when observed in a field of view of $5000\times$ to $20000\times$ using a scanning electron microscope (SEM).

As used herein, the term "secondary particle" indicates a particle formed by aggregation of more than 30 sub-particles. To distinguish the sub-particle constituting the single particle type particle above, each sub-particle unit constituting the secondary particle is referred to as a "primary particle".

As used herein, when a "particle" is described, any one or all of a single particle, a quasi-single particle, a primary particle, a nodule, and a secondary particle may be encompassed.

As used herein, the term "average particle size $D_{50}$" indicates a particle diameter at 50% of the volume accumulation in volume accumulated particle size distribution of powder to be measured, and may be measured using a laser diffraction method. For example, the average particle diameter D50 may be measured in a way that the target powder for measurement is dispersed in a dispersion medium, the dispersion medium is introduced into a commercial laser diffraction particle size measurement instrument (e.g., Microtrac MT 3000), and irradiated with ultrasonic waves having a frequency of about 28 kHz and an output of 60 W to obtain a volume accumulated particle size distribution graph, and the particle diameter at 50% of the volume accumulation is calculated.

The present inventors have conducted research to develop a lithium secondary battery having excellent lifespan performance and storage performance at high temperature and high voltage while achieving high capacity characteristics, and as a result, the present inventors have found that by including nickel among metals excluding lithium in an amount of 50 mol% to 70 mol% and adjusting the structure, discharge capacity, and weight of an electrolyte remaining after activation of the lithium secondary battery to satisfy a specific equation, capacity characteristics of the lithium secondary battery were excellent, high voltage and high temperature life characteristics and storage characteristics were excellent, and electrolyte impregnability could be improved, and thus the present inventors have completed the present invention.

Hereinafter, aspects of the present disclosure will be described in detail.

A lithium secondary battery according to the present disclosure may include at least one of the following components, and may include any combination of technically feasible components among the following components.

Lithium secondary battery

A lithium secondary battery according to the present disclosure includes an electrode assembly including a positive electrode, a negative electrode, and a separator placed between the positive electrode and the negative electrode. The lithium secondary battery also includes an electrolyte, and a battery case including an internal space for accommodating the electrode assembly and the electrolyte. The positive electrode includes a positive electrode active material, and the positive electrode active material includes a lithium nickel-based oxide containing 50 mol% to 70 mol% of nickel among all metals excluding lithium. An electrolyte filling factor (EFF) index (unit: g/Ah) defined by Equation 1 below is 1.52 to 1.88.

$$[\text{Equation 1}]$$

$$\text{EFF} = \frac{R_E \times S_U}{N_C}$$

In Equation 1 above, $R_E$ [unit: g] is a mass of residual electrolyte contained in a lithium secondary battery after activation, $S_U$ is a ratio $(S_E/S_C)$ of the volume $(S_E)$ of the electrode assembly and the volume $(S_C)$ of the lithium secondary battery, and $N_C$ [unit: Ah] is a capacity when the lithium secondary battery is discharged from 4.4 V to 3.0 V at 0.33 C at 25 °C.

The lithium secondary battery according to the present disclosure may have an EFF index (unit: g/Ah), defined by Equation 1, of 1.52 to 1.88, specifically, 1.52 or greater, 1.54 or greater, 1.56 or greater, 1.58 or greater, 1.60 or greater, 1.62 or greater, 1.64 or greater, and may have an EFF index (unit: g/Ah) defined by Equation 1 of 1.88 or less, 1.86 or less, 1.84 or less, 1.82 or less, 1.80 or less, 1.78 or less, 1.76 or less, 1.74 or less, 1.72 or less, 1.70 or less, 1.68 or less, 1.66 or less. For example, the EFF index may be 1.52 to 1.88, preferably 1.52 to 1.78, more preferably 1.56 to 1.70, and more preferably 1.60 to 1.68.

Recently, there was an effort to increase the energy density of a positive electrode by using lithium nickel-based oxide containing nickel, cobalt, and manganese and having a greater content of nickel, as a positive electrode active material to achieve the high capacity characteristics of lithium secondary batteries. However, when the nickel content of the lithium nickel-based oxide is increased, degradation in structural stability and chemical stability of the positive electrode active material is caused due to changes of $Ni^{2+}$ ions to $Ni^{4+}$ ions. Accordingly, side reactions with an electrolyte are accelerated, resulting in reduced lifetime characteristics. This phenomenon is further accelerated when exposed to high temperatures, leading to significantly reduced thermal stability.

When the nickel content of the lithium nickel-based oxide is reduced, thermal stability at high temperatures may be improved. In order to achieve the same level of energy density as the lithium nickel-based oxide containing a high nickel content, the lithium nickel-based oxide with a reduced nickel content needs to be driven at high voltages (e.g., 4.35 V or higher). However, when driven at such high voltages, oxygen desorption is caused due to changes in the oxidation number of nickel and cobalt, thereby exacerbating electrolyte side reactions and increasing gas generation. This may result in degradation in lifetime performance and storage performance.

Accordingly, the electrolyte injection amount needs to be reduced to decrease gas generation. However, when the electrolyte injection amount is excessively reduced, electrolyte impregnation of an electrode deteriorates, causing a decrease in mobility of lithium ions and an increase cell resistance. Thus, batteries may have rather reduced capacity and lifetime characteristics, and the electrolyte injection amount needs to be appropriately adjusted according to the characteristics of batteries.

Accordingly, the lithium secondary battery according to the present disclosure prevents the issues described above by adjusting the mass of an electrolyte remaining after activation to a specific condition based on the characteristics of the lithium secondary battery according to a ratio of the volume of the lithium secondary battery excluding a battery case and the volume of the lithium secondary battery, and discharge capacity of the lithium secondary battery.

Specifically, the lithium secondary battery according to the present disclosure may achieve high energy density and high capacity characteristics by adjusting the EFF index defined by Equation 1 above to be 1.52 to 1.88. The lithium secondary battery also may exhibit excellent thermal stability, reduced gas generation, and appropriate electrolyte impregnability, resulting in excellent high-temperature lifetime characteristics and high-temperature storage characteristics.

In Equation 1, $R_E$ indicates a mass of residual electrolyte contained in a lithium secondary battery after activation of the lithium secondary battery.

The residual electrolyte included in the lithium secondary battery is a total of the electrolyte impregnated in the internal pores of the electrode assembly and the electrolyte outside the electrode assembly in the internal space of the battery case.

The residual electrolyte refers to electrolyte within the battery case after activation of the lithium secondary battery. The mass of the residual electrolyte may differ from the mass of electrolyte initially injected into the battery case during production of the lithium secondary battery, before activation.

The activation is a process of charging and/or discharging a lithium secondary battery manufactured but not yet charged or discharged to provide electrical characteristics, and forming a solid electrolyte interphase (SEI) film on an electrode to stabilize batteries, thereby making the batteries ready for actual use.

With respect to $R_E$, the activation may be achieved by performing the process of charging the lithium secondary battery up to a voltage of 4.0 V or greater at 55 °C at least once.

Specifically, the activation may be achieved by performing (1) charging up to 4.0 V or an SOC of 3% under a constant current condition of 0.2 C at 55 °C, (2) charging up to 4.35 V or an SOC of 20% under a constant current condition of 1.0 C at 55 °C, and (3) charging up to 4.35 V or an SOC of 60% under a constant current condition of 1.0 C at 55 °C.

In addition, the mass ($R_E$) of the residual electrolyte included in the lithium secondary battery after the activation may be measured by (1) measuring the mass of the lithium secondary battery after the activation ($M_L$), which comprises an electrode assembly, an electrolyte, and a battery case, and in a sealed state of the battery case, (2) disassembling the lithium secondary battery and removing the electrolyte in the internal space of the battery case, (3) immersing the battery case and the electrode assembly in a solvent such as dimethyl carbonate to remove the electrolyte present on the surface of the battery case, the surface of the electrode assembly, and in the internal pores of the electrode assembly, and then drying the battery case and the electrode assembly, (4) measuring the mass of the dried battery case ($M_C$) and the mass of the dried electrode assembly ($M_A$), and then substituting the measured $M_L$, $M_C$, and $M_A$ into the Equation A below.

$$[\text{Equation A}]$$

$$R_E = M_L - M_C - M_A$$

The $R_E$ may be 70 to 90 g, 72 to 88 g, 75 to 85 g, or 77 to 83 g. When the above range is satisfied, electrolyte side reactions are reduced, resulting in decreased gas generation and sufficient electrolyte impregnation. Thus, sufficient mobility of lithium ions may be secured, and additives for forming an SEI film may sufficiently be present to form a stable film. Accordingly, lifetime characteristics, output characteristics, and high-temperature storage characteristics may be excellent in the medium to long term.

In Equation 1, $S_U$ is a ratio ($S_E/S_C$) of the volume ($S_E$) of the electrode assembly to the volume ($S_C$) of the lithium secondary battery.

The volume of the electrode assembly is a sum of the volumes occupied by the positive electrode, the negative electrode, and the separator. The volume of the electrode assembly may be regulated by controlling the porosity and loading amount of positive and negative electrodes and the N/P ratio which is the ratio of negative electrode capacity to positive electrode capacity, or by varying the type of conductive material included in the positive and negative electrodes.

When the battery case is a pouch-type battery case, the volume $S_E$ of the electrode assembly may be obtained according to Equation B below. The volume $S_E$ of the electrode assembly according to Equation B below is obtained by assuming that the electrode assembly accommodated in the pouch-type battery case has a rectangular parallelepiped shape in which the positive electrode, the negative electrode, and the separator are stacked, and the length and width of the electrode assembly are equal to the length and width of the negative electrode, respectively.

$$S_E = (\text{Thickness of electrode assembly}) \times (\text{Length of negative electrode}) \times (\text{Width of negative electrode}) \qquad [\text{Equation B}]$$

In Equation B above, the thickness of the electrode assembly is a total thickness of a structure in which the positive electrode, the negative electrode, and the separator are stacked, and may be determined as a total distance measured in a direction perpendicular to a surface of each layer in a state in which the positive electrode, the negative electrode, and the separator are stacked. The thickness of the electrode assembly may be regulated by controlling the porosity and loading amount of positive and negative electrodes, and the N/P ratio, or by varying the type of conductive material included in the positive and negative electrodes. The length of the negative electrode is a straight-line distance measured along a longest axis direction (length direction) of the negative electrode, and may be determined as a straight-line distance along the longest axis in a plane perpendicular to the thickness direction of the negative electrode. The width of the negative electrode is a straight-line distance measured along a direction perpendicular to the length direction of the negative electrode, and may be determined as a straight-line distance along a direction perpendicular to the length direction of the negative electrode in a plane perpendicular to the thickness direction of the negative electrode.

It should be understood that the shape of the electrode assembly is not necessarily limited to a rectangular parallelepiped shape, as described above. The electrode assembly may have any suitable shape, and the volume of the electrode assembly may be determined by any suitable measurement method.

The volume $S_C$ of the lithium secondary battery is a volume calculated with respect to an external shape of the lithium secondary battery, and specifically indicates a volume of a space occupied by an external shape of the lithium secondary battery. In some aspects, the external shape of the lithium secondary battery may be the same as an external shape of the battery case when the battery case is sealed. The volume of the lithium secondary battery may be regulated by controlling the porosity and loading amount of positive and negative electrodes, and the N/P ratio, or by varying the type of conductive material included in the positive and negative electrodes.

When the battery case is a pouch-type battery case, volume $S_C$ of the lithium secondary battery may be obtained according to Equation C below. The volume $S_C$ of the lithium secondary battery according to Equation C below is obtained by assuming that the lithium secondary battery including the pouch-type battery case has a rectangular parallelepiped shape.

$$S_C = \text{(Thickness of lithium secondary battery)} \times \text{(Length of lithium secondary battery)} \times \text{(Width of lithium secondary battery)} \qquad \text{[Equation C]}$$

In Equation C above, the thickness of the lithium secondary battery may be a distance measured along a thickness direction of the lithium secondary battery with respect to an external shape of the lithium secondary battery. The thickness of the lithium secondary battery may be regulated by controlling the porosity and loading amount of positive and negative electrodes, and the N/P ratio, or by varying the type of conductive material included in the positive and negative electrodes. The length of the lithium secondary battery is a distance measured along a length direction of the lithium secondary battery with respect to an external shape of the lithium secondary battery. The width of the lithium secondary battery is a distance measured along a width direction of the lithium secondary battery with respect to an external shape of the lithium secondary battery.

It should be understood that the shape of the lithium secondary battery is not necessarily limited to a rectangular parallelepiped shape, as described above. The lithium secondary battery may have any suitable shape, and the volume of the lithium secondary battery may be determined by any suitable measurement method.

$S_U$ may be 0.75 to 0.95, preferably 0.78 to 0.92, and more preferably 0.83 to 0.91. When the above range is satisfied, the relative space utilization rate may be increased within the same capacity, thereby achieving high energy density, and gas generation caused by electrolyte side reactions may be appropriately accommodated.

The $S_E$ may be 0.17 to 1.1 L, 0.25 to 1.0 L, or 0.4 to 0.8 L.

The $S_C$ may be 0.23 to 1.2 L, preferably 0.3 to 1.1 L, and more preferably 0.5 to 1.0 L.

$N_C$ indicates a capacity when the lithium secondary battery is discharged from 4.4 V to 3.0 V at 0.33 C at 25 °C.

Specifically, $N_C$ may refer to a capacity when the lithium secondary battery is activated, charged at 25 °C and discharged from 4.4 V to 3.0 V at 0.33 C, indicating a discharge capacity when the first charge/discharge is performed after activation. With respect to $N_C$, the activation may be performed by charging a lithium secondary battery, which is manufactured but not yet charged or discharged, at 25 °C at a constant current/constant voltage condition of 0.33 C up to 4.35 V with a 0.05 C cut, and discharging the lithium secondary battery at a constant current condition of 0.33 C up to 2.0 V. With respect to $N_C$, the charging in the first charge/discharge after the activation may be performed by charging the lithium secondary battery at a C-rate of 0.33 C at 25 °C up to 4.35 V from 3.0 V.

In Equation 1, $N_C$ may be 35 to 50 Ah, preferably 38 to 45 Ah, more preferably 41 to 44 Ah, and more preferably 42 to 43 Ah. When the above range is satisfied, high capacity characteristics may be achieved.

A ratio of the mass $R_E$ of the residual electrolyte included in the lithium secondary battery after activation to the capacity $N_C$ when the lithium secondary battery is discharged from 4.4 V to 3.0 V at 0.33 C at 25 °C ($R_E/N_C$) [unit: g/Ah] may be 1.5 to 3. Specifically, the $R_E/N_C$ (unit: g/Ah) may be 1.5 or greater, 1.53 or greater, 1.55 or greater, 1.57 or greater, 1.6 or greater, 1.63 or greater, 1.65 or greater, 1.67 or greater, 1.7 or greater, 1.73 or greater, 1.75 or greater, 1.77 or greater, 1.8 or greater, 1.83 or greater, 1.85 or greater, 1.87 or greater, 1.9 or greater, 1.93 or greater, 1.95 or greater, 1.97 or greater, 2.0 or greater, and may be 3 or less, 2.97 or less, 2.95 or less, 2.93 or less, 2.9 or less, 2.87 or less, 2.85 or less, 2.83 or less, 2.8 or less, 2.77 or less, 2.75 or less, 2.73 or less, 2.7 or less, 2.67 or less, 2.65 or less, 2.63 or less, 2.63 or less, 2.6 or less, 2.57 or less, 2.55 or less, 2.53 or less, 2.5 or less, 2.47 or less, 2.45 or less, 2.43 or less, 2.4 or less, 2.37 or less, 2.35 or less, 2.33 or less, 2.3 or less, 2.27 or less, 2.25 or less, 2.23 or less, 2.2 or less, 2.17 or less, 2.15 or less, 2.13 or less, 2.1 or less, 2.07 or less, 2.05 or less, 2.03 or less, 2.0 or less. For example, the $R_E/N_C$ (unit: g/Ah) may be 1.5 to 3, preferably 1.7 to 2.5, and more preferably 1.85 to 2.15.

Hereinafter, each component of the lithium secondary battery according to the present disclosure will be described in more detail.

The lithium secondary battery according to the present disclosure includes an electrode assembly including a positive electrode, a negative electrode, and a separator placed between the positive electrode and the negative electrode; an electrolyte; and a battery case accommodating the electrode assembly and the electrolyte.

(1) Electrode assembly

The electrode assembly according to the present disclosure includes a positive electrode, a negative electrode, and a separator placed between the positive electrode and the negative electrode.

Specifically, the electrode assembly may be formed by sequentially stacking the positive electrode, the separator, and the negative electrode, and the positive electrode and the negative electrode may be mutually insulated by the separator.

Types of the electrode assembly may include a stack type, a jelly roll type, and a stack and folding type, but are not limited thereto.

Hereinafter, each component of the electrode assembly according to the present disclosure will be described in detail.

1) Positive electrode

The positive electrode includes a positive electrode active material. Specifically, the positive electrode may include a positive electrode current collector and a positive electrode active material layer placed on the positive electrode current collector. The positive electrode active material layer may include a positive electrode active material.

Various positive electrode current collectors known in the art may be used. For example, stainless steel, aluminum, nickel, titanium, fired carbon, or aluminum or stainless steel that is surface-treated with one of carbon, nickel, titanium, silver, or the like may be used as the positive electrode current collector. The positive electrode current collector may typically have a thickness of 3 to 500 $\mu$m, and fine irregularities may be formed on a surface of the positive electrode current collector to enhance adhesion of the positive electrode active material. For example, the positive electrode current collector may be used in various forms such as a film, a sheet, a foil, a net, a porous body, a foam body, or a non-woven fabric body.

The positive electrode active material layer may be placed on the positive electrode current collector, and may be placed on one surface or both surfaces of the positive electrode current collector. The positive electrode active material layer may have a single-layer structure or a multi-layer structure of two or more layers.

The positive electrode active material includes a lithium nickel-based oxide. The lithium nickel-based oxide may contain nickel in an amount of 50 mol% to 70 mol%, preferably 52 mol% to 68 mol%, more preferably 55 mol% to 65 mol%, and more preferably 57 mol% to 63 mol%, with respect to all metals excluding lithium. The positive electrode active material is superior to the positive electrode active material including lithium nickel-based oxide containing a high nickel content in structural stability and chemical stability at high temperatures, resulting in excellent thermal stability, and gas generation and swelling caused by residual lithium byproducts (LiOH, $Li_2CO_3$, or the like) present on a surface of the positive electrode active material may be mitigated, leading to excellent lifetime characteristics.

The lithium nickel-based oxide may contain cobalt (Co) in an amount of 15 mol% or less, preferably 5 mol% to 15 mol%, more preferably 7 mol% to 13 mol%, and more preferably 8 mol% to 12 mol% cobalt, with respect to all metals excluding lithium. When cobalt is included in the above range, with a lower Co content, cost savings as well as improved resistance characteristics and output characteristics may be achieved.

According to one or more aspects of the present disclosure, the lithium nickel-based oxide may be represented by Formula 1 below.

$$[\text{Formula 1}] \qquad Li_{1+a1}[Ni_{x1}Co_{y1}Mn_{z1}M^1_{w1}]O_2$$

In Formula 1 above, $M^1$ may be at least one doping element selected from W, Cu, Fe, V, Cr, Ti, Zr, Zn, Al, In, Ta, Y, La, Sr, Ga, Sc, Gd, Sm, Ca, Ce, Nb, Mg, B, or Mo, and preferably, $M^1$ may be at least one doping element selected from the group consisting of W, Y, Ba, Ca, Ti, Mg, Ta, and Nb.

In Formula 1 above, 1+a1 is a molar ratio of lithium (Li) in the lithium nickel-based oxide, and may satisfy $0 \leq a1 \leq 0.5$, specifically $0 \leq a1 \leq 0.2$, and more specifically $0 \leq a1 \leq 0.1$. When the above range is satisfied, the positive electrode active material may form a stable layered crystal structure.

In Formula 1 above, x1 is a molar ratio of nickel to all metals excluding lithium in the lithium nickel-based oxide particles, and may satisfy $0.5 \leq x1 \leq 0.7$, specifically $0.52 \leq x1 \leq 0.68$, more specifically $0.55 \leq x1 \leq 0.65$, and more specifically $0.57 \leq x1 \leq 0.63$. When the above range is satisfied, the resulting lithium secondary battery may be superior in high-temperature storage characteristics, high-temperature lifetime characteristics, and thermal stability.

In Formula 1 above, y1 is a molar ratio of cobalt to all metals excluding lithium in the lithium nickel-based oxide particles, and may satisfy $0 < y1 \leq 0.15$, specifically $0 < y1 \leq 0.10$, and more specifically $0 < y1 \leq 0.07$. When the above range is satisfied, with a reduction in Co content, cost savings, good resistance characteristics, and output characteristics may be achieved, and with a relative increase in ratio of Mn, the positive electrode active material may have improved structural stability.

In Formula 1 above, z1 is a molar ratio of manganese to all metals excluding lithium in the lithium nickel-based oxide particles, and may satisfy $0 < z1 \leq 0.4$, specifically $0.1 \leq z1 \leq 0.4$, more specifically $0.15 \leq z1 \leq 0.4$, and more specifically $0.2 \leq z1 \leq 0.4$. When the above range is satisfied, the positive electrode active material may have improved structural stability.

w1 above represents a mole ratio of $M^1$ to all metals excluding lithium in the lithium nickel-based oxide and may satisfy $0 \leq w1 \leq 0.2$, specifically $0 \leq w1 \leq 0.15$, and more specifically $0 \leq w1 \leq 0.1$. When the above range is satisfied, particle growth during firing of the positive electrode active material may be facilitated or crystal structure stability may be improved.

In addition, the lithium nickel-based oxide may be a single particle type particle.

Specifically, when the lithium nickel-based oxide is a secondary particle, particle breakage increases during electrode manufacturing, and internal cracks are caused due to volume expansion/contraction of primary particles during charge/discharge, which may reduce the effect of improving high-temperature lifetime characteristics and high-temperature storage characteristics.

Accordingly, when the lithium nickel oxide, which is a single particle type particle as described above, is used, particles are less broken in rolling since the lithium nickel oxide has higher particle strength than a typical lithium nickel-based oxide in the form of a secondary particle in which several tens to several hundreds of primary particles are aggregated. In addition, since the lithium nickel oxide according to the present disclosure, which is a single particle type particle, has a small number of primary particles, changes resulting from the volume expansion/contraction of primary particles during charge and discharge are small, and accordingly, the generation of cracks inside the particles is substantially reduced.

Therefore, the lithium secondary battery according to the present disclosure uses the lithium nickel-based oxide, which is a single particle type particle, and may thus have excellent thermal stability resulting from reduced particle breakage and internal particle cracking during charge and discharge, resulting in improved high-temperature lifetime characteristics and high-temperature storage characteristics.

Meanwhile, the positive electrode active material may have an average particle size ($D_{50}$) of 1 $\mu$m to 8 $\mu$m. Preferably, the positive electrode active material may have an average particle size ($D_{50}$) of 2 $\mu$m to 7 $\mu$m, more preferably 2.5 $\mu$m to 6 $\mu$m, more preferably 3 $\mu$m to 5 $\mu$m, and more preferably 3.5 $\mu$m to 4.5 $\mu$m. When the above range is satisfied, side reactions with an electrolyte may be minimized while an increase in resistance and degradation in output characteristics are prevented, and thus high-temperature lifetime characteristics and high-temperature storage characteristics may be excellent.

The positive electrode active material layer may include the positive electrode active material in an amount of 90 wt% to 99 wt%, preferably 92 wt% to 98 wt%, and more preferably 94 wt% to 98 wt%. When the above range is satisfied, the lithium secondary battery may have improved energy density and capacity characteristics.

Meanwhile, the positive electrode active material layer may optionally further include at least one of a positive electrode conductive material or a positive electrode binder.

The positive electrode conductive material is used to impart conductivity to an electrode, and any positive electrode conductive material may be used without particular limitation as long as it has electron conductivity without causing chemical changes in batteries to be constituted. Specific examples thereof may include graphite such as natural graphite or artificial graphite; a carbon-based material such as carbon black, acetylene black, Ketjen black, channel black, furnace black, lamp black, thermal black, carbon fibers, or carbon nanotubes; metal powder or metal fiber such as copper, nickel, aluminum, or silver; a conductive whisker such as a zinc oxide whisker or a potassium titanate whisker; a conductive metal oxide such as a titanium oxide; or a conductive polymer such as a polyphenylene derivative, and any one thereof or a mixture of two or more thereof may be used. The positive electrode conductive material may typically be included in an amount of 1 to 30 wt%, preferably 1 to 20 wt%, and more preferably 1 to 10 wt%, with respect to the total weight of the positive electrode active material layer.

The positive electrode binder serves to improve the bonding between positive electrode material particles and the adhesion between a positive electrode material and a positive electrode current collector, and specific examples of the positive electrode binder may be fluorine resin-based binders including polyvinylidene fluoride (PVDF) or polytetrafluoroethylene (PTFE); rubber-based binders including styrene butadiene rubber (SBR), acrylonitrile-butadiene rubber, or styrene-isoprene rubber; cellulose-based binders including carboxyl methyl cellulose (CMC), starch, hydroxy propyl cellulose, or regenerated cellulose; polyalcohol-based binders including polyvinyl alcohol; polyolefin-based binders including polyethylene or polypropylene; polyimide-based binders; polyester-based binders; or silane-based binders, and any one thereof or a mixture of two or more thereof may be used. The positive electrode binder may be included in an amount of 1 wt% to 30 wt%, preferably 1 wt% to 20 wt%, and more preferably 1 wt% to 10 wt%, with respect to the total weight of the positive electrode active material layer.

Meanwhile, the positive electrode may be manufactured by applying a positive electrode slurry onto one side or both sides of a long sheet-shaped positive electrode current collector, removing a solvent of the positive electrode slurry through a drying process, and then rolling. Meanwhile, a positive electrode including a non-coating portion may be manufactured by not applying a positive electrode slurry onto a portion of a positive electrode current collector, for example, one end of the positive electrode current collector, when applying the positive electrode slurry.

In addition, the positive electrode slurry may be manufactured by dispersing a positive electrode active material in a solvent such as dimethyl sulfoxide (DMSO), isopropyl alcohol, N-methylpyrrolidone (NMP), acetone, or water.

2) Negative electrode

The negative electrode may include a negative electrode active material. Specifically, the negative electrode may include a negative electrode current collector and a negative electrode active material layer placed on the negative electrode current collector, and the negative electrode active material layer may include a negative electrode active material.

The negative electrode current collector is not particularly limited as long as it has a high conductivity without causing a chemical change in a battery. For example, copper, stainless steel, aluminum, nickel, titanium, baked carbon, copper or stainless steel that is surface-treated with one of carbon, nickel, titanium, silver, or the like, an aluminum-cadmium alloy, or the like may be used. The negative electrode current collector may generally have a thickness of 3 μm to 500 μm.

In addition, the negative electrode current collector, like the positive electrode current collector, may have fine irregularities formed on a surface thereof to improve bonding strength of a negative electrode active material. For example, the negative electrode current collector may be used in various forms such as a film, a sheet, a foil, a net, a porous body, a foam body, or a non-woven fabric body.

The negative electrode active material layer may be placed on the negative electrode current collector, and may specifically be placed on one surface or both surfaces of the negative electrode current collector. The negative electrode active material layer may have a single-layer structure or a multi-layer structure of two or more layers.

The negative electrode may include graphite as a negative electrode active material. In this case, the negative active material has smaller change in volume during charge and discharge than a silicon-based active material, and may thus have excellent lifetime characteristics.

Specifically, the graphite may be at least one selected from the group consisting of artificial graphite and natural graphite. In some aspects, the graphite may be a combination of artificial graphite and natural graphite.

When the graphite includes artificial graphite and natural graphite, the artificial graphite and the natural graphite may be included in a weight ratio of 6.5:3.5 to 9.5:0.5, preferably 7:3 to 9:1, and more preferably 7.5:2.5 to 8.5:1.5. When the above range is satisfied, capacity characteristics may be improved while output characteristics and lifespan characteristics may be excellent.

The negative electrode active material may be included in an amount of 80 wt% to 99 wt%, preferably 85 wt% to 99 wt%, and more preferably 90 wt% to 98 wt%, with respect to the total weight of the negative electrode active material layer. When the above range is satisfied, sufficient capacity characteristics may be achieved.

Meanwhile, the negative electrode active material layer may optionally further include a negative electrode conductive material and a negative electrode binder, in addition to the negative electrode active material.

The negative electrode conductive material is used to impart conductivity to an electrode, and any negative electrode conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fibers, or carbon nanotubes; metal powder or metal fiber such as copper, nickel, aluminum, or silver; a conductive whisker such as a zinc oxide whisker or a potassium titanate whisker; a conductive metal oxide such as a titanium oxide; or a conductive polymer such as a polyphenylene derivative, and any one thereof or a mixture of two or more thereof may be used. The negative electrode conductive material may typically be included in an amount of 1 to 30 wt%, preferably 1 to 20 wt%, and more preferably 1 to 10 wt%, with respect to the total weight of the negative electrode active material layer.

The negative electrode binder serves to improve the bonding between negative electrode active material particles and the adhesion between the negative electrode active material and the negative electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber(EPDM rubber), a sulfonated EPDM, styrene-butadiene rubber (SBR), fluorine rubber, or various copolymers thereof, and any one thereof or a mixture of two or more thereof may be used. The negative electrode binder may be included in an amount of 1 to 30 wt%, preferably 1 to 20 wt%, and more preferably 1 to 10 wt%, with respect to the total weight of the negative electrode active material layer.

The negative electrode may be manufactured according to a typical method for manufacturing a negative electrode. For example, the negative electrode active material, the negative electrode conductive material, and/or the negative electrode bonder may be mixed in a negative electrode solvent to prepare a negative electrode slurry, and the negative electrode slurry may be applied onto a negative electrode current collector, and then dried and rolled to prepare the negative electrode.

The negative electrode solvent may include at least one selected from the group consisting of distilled water, ethanol, methanol, and isopropyl alcohol. In some aspects, the negative electrode solvent may comprise distilled water, in terms of facilitating the dispersion of components of the negative electrode slurry.

The negative electrode slurry may have a solid content of 30 wt% to 80 wt%, specifically 40 wt% to 70 wt%.

The negative electrode may be prepared by casting a separate support with the negative electrode slurry and then laminating the positive electrode current collector with a film separated from the support.

3) Separator

The separator may be placed between the positive electrode and the negative electrode.

The separator is placed between the positive electrode and the negative electrode, and thus serves to separate the negative electrode and the positive electrode and provide a passage for lithium ion migration, and any separator commonly used in lithium secondary batteries may be used without particular limitation. The separator may comprise a porous polymer film. For example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a stack structure having two or more layers thereof may be used as the separator. In addition, the separator may comprise a typical porous nonwoven fabric. For example, a nonwoven fabric formed of glass fiber having a high melting point or polyethylene terephthalate fiber may be used as the separator. Furthermore, a coated separator including a ceramic component or a polymer material may be used to secure heat resistance or mechanical strength.

(2) Electrolyte

The electrolyte according to the present disclosure may include a lithium salt and an organic solvent.

Any compound may be used as the lithium salt without particular limitation, as long as it is a compound capable of providing lithium ions used in lithium secondary batteries. Specifically, the lithium salt may include at least one selected from the group consisting of $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$ $LiN(C_2F_5SO_3)_2$, $LiN(C_2F_3SO_2)_2$, $LiN(CF_3SO_2)_2$. $LiCl$, $LiI$, and $LiB(C_2O_4)_2$. For example, the lithium salt may be $LiPF_6$. The lithium salt may be present in a concentration range of 0.1 M to 3.0 M, preferably 0.1 M to 2.0 M, and more preferably 0.5 M to 1.5 M. When the concentration of the lithium salt is included within the above range, the electrolyte has suitable conductivity and viscosity and may thus exhibit excellent performance, and lithium ions may effectively move.

An organic solvent is a non-aqueous solvent commonly used in lithium secondary batteries, and is not particularly limited as long as its decomposition due to an oxidation reaction or the like may be minimized in the charging/discharging process of secondary batteries.

Specifically, the organic solvent may include at least one selected from the group consisting of a cyclic carbonate-based organic solvent, a linear carbonate-based organic solvent, a linear ester-based organic solvent, or a cyclic ester-based organic solvent.

Specifically, the organic solvent may include a cyclic carbonate-based organic solvent, a linear carbonate-based organic solvent, or a mixture thereof.

The cyclic carbonate-based organic solvent is an organic solvent which may dissociate lithium salt in an electrolyte due to high permittivity as a highly viscous organic solvent. Specifically, the cyclic carbonate-based organic solvent may include at least one organic solvent selected from the group consisting of ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate, more specifically, the cyclic carbonate-based organic solvent may include at least one selected from the group consisting of ethylene carbonate (EC) and fluoroethylene carbonate (FEC), and more specifically, the cyclic carbonate-based organic solvent may include ethylene carbonate (EC).

In addition, the linear carbonate organic solvent is an organic solvent having low viscosity and low permittivity. Specifically, the linear carbonate organic solvent may include at least one selected from the group consisting of dimethyl carbonate (DMC), diethyl carbonate (DEC), dipropyl carbonate, ethylmethyl carbonate (EMC), methylpropyl carbonate, and ethylpropyl carbonate, more specifically, the linear carbonate organic solvent may include at least one selected from the group consisting of ethylmethyl carbonate (EMC) and diethyl carbonate (DEC), and more specifically, the linear carbonate organic solvent may include ethylmethyl carbonate (EMC).

The organic solvent may be a mixture of a cyclic carbonate-based organic solvent and a linear carbonate-based organic solvent. In this case, the cyclic carbonate-based organic solvent and the linear carbonate-based organic solvent may be mixed in a volume ratio of 5:95 to 40:60, specifically a volume ratio of 10:90 to 25:75. When the mixing ratio of the cyclic carbonate-based organic solvent and the linear carbonate-based organic solvent satisfies the above range, both high permittivity and low viscosity are satisfied, and excellent ionic conductivity may be achieved.

In addition, in order to prepare an electrolyte having high ionic conductivity, the organic solvent may further include at least one ester-based organic solvent selected from the group consisting of a linear ester-based organic solvent and a cyclic ester-based organic solvent, along with at least one carbonate-based organic solvent selected from the group consisting of the cyclic carbonate-based organic solvent and the linear carbonate-based organic solvent.

The linear ester-based organic solvent may specifically include at least one selected from the group consisting of methyl acetate, ethyl acetate, propyl acetate, methyl propionate, ethyl propionate, propyl propionate, and butyl propionate.

In addition, the cyclic ester-based solvent may specifically include at least one selected from the group consisting of $\gamma$-butyrolactone, $\gamma$-valerolactone, $\gamma$-caprolactone, o-valerolactone, and $\varepsilon$-caprolactone.

Meanwhile, the organic solvent may be used by adding an organic solvent commonly used in a non-aqueous electrolyte without limitation, when needed. For example, at least one organic solvent selected from an ether-based organic solvent, a glyme-based solvent, and a nitrile-based organic solvent may be further included.

As the ether-based solvent, any one selected from the group consisting of dimethyl ether, diethyl ether, dipropyl ether, methylethyl ether, methylpropyl ether, ethylpropyl ether, 1,3-dioxolane (DOL), and 2,2-bis(trifluoromethyl)-1,3-dioxolane (TFDOL), or a mixture of two or more thereof may be used, but the ether-based solvent is not necessarily limited thereto.

The glyme-based solvent may be a solvent having higher permittivity and a lower surface tension than a linear carbonate-based organic solvent, and may be less reactive with metal. The glyme-based solvent may include at least one selected from the group consisting of dimethoxyethane (glyme, DME), diethoxyethane, digylme, tri-glyme, and tetra-glyme (TEGDME), but is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

Meanwhile, in addition to the electrolyte constituents, the electrolyte may also further include other additives for improving lifetime characteristics of batteries, preventing reduction in battery capacity, and increasing battery discharge capacity.

Typical examples of the other additives may include at least one selected from the group consisting of a cyclic carbonate-based compound, a halogen-substituted carbonate-based compound, a sultone-based compound, a sulfate-based compound, a borate-based compounds, a nitrile-based compound, a benzene-based compound, an amine-based compound, a silane-based compound, and a lithium salt-based compound different from the lithium salt contained in the electrolyte.

Specifically, the other additives may be one or more compounds selected from the group consisting of vinylene carbonate (VC), vinylethylene carbonate, fluoroethylene carbonate (FEC), 1,3-propane sultone (PS), 1,4-butane sultone, ethene sultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenylborate, lithium oxalyldifluoroborate, succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, $LiN(SO_2F)_2$ (lithium bis(fluorosulfonyl)imide, LiFSI), $LiN(SO_2CF_3)_2$ (lithium bis (trifluoromethane sulfonyl) imide, LiTFSI), $LiPO_2F_2$, LiODFB, $LiB(C_2O_4)_2$ (lithium bisoxalatoborate, LiBOB), and LiBF4.

The other additives may be included in an amount of 0.01 wt% to 20 wt%, preferably 0.03 wt% to 10 wt%, and more preferably 0.05 wt% to 5.0 wt%, with respect to the total weight of the electrolyte. When the other additives are present in an amount of less than 0.01 wt%, the effects of improving the low-temperature output, high-temperature storage characteristics, and high-temperature lifetime characteristics of batteries are insignificant. When the other additives are present in an amount of greater than 20 wt%, there is a chance that side reactions in an electrolyte may occur excessively during charging and discharging of batteries. In particular, when the SEI layer-forming additives are added in excessive amounts, the additives may not be sufficiently decomposed at high temperatures, and thus may remain as unreacted substances or precipitated substances in an electrolyte at room temperature. Accordingly, side reactions that reduce the lifespan or resistance characteristics of a secondary battery may occur.

(3) Battery case

The battery case may serve to accommodate an electrode assembly and an electrolyte.

Specifically, the battery case is designed to accommodate an electrode assembly and injected electrolyte, and then be sealed. The battery case is made from a material having a predetermined flexibility to form an accommodation portion, and may preferably be a cylindrical type, a coin type, a prismatic type, or a pouch-type, but is not limited thereto. An upper case and a lower case constituting the battery case may be independent members, or may be substantially a single-body member with one end connected. The external form of the battery case may be produced using a variety of methods without limitation in aspects of the present disclosure.

For example, the battery case may be a pouch-type battery case. The pouch-type battery case may be manufactured by molding a pouch film laminate. The pouch-type battery case may accommodate the electrode assembly inside an outer material manufactured by molding a pouch film laminate.

In the pouch film laminate, a base layer, a gas barrier layer, and a sealant layer are stacked in this order, but the aspect of the present disclosure is not limited thereto.

Specifically, the base layer is formed on an outermost layer of the pouch film laminate to protect secondary batteries against external friction and collision. The base layer is made of a polymer and may thus electrically insulate the electrode assembly from the outside.

The base layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, nylon, polyester, polyparaphenylene benzobisoxazole, polyarylate, and teflon. In particular, the base layer may preferably be made of polyethylene terephthalate (PET), nylon, or a combination thereof, which have wear resistance and heat resistance.

The gas barrier layer is stacked between the base layer and the sealant layer to secure mechanical strength of a pouch, block the entry and exit of gases or moisture outside secondary batteries, and prevent electrolyte leakage from the inside of a pouch-type battery case. The gas barrier layer may be formed of metal. For example, the gas barrier layer may be a metal thin film containing at least one metal selected from the group consisting of aluminum (Al), copper (Cu), stainless steel (SUS), nickel (Ni), titanium (Ti), and INVAR, but is not limited thereto.

The sealant layer is thermally bonded together at a sealing portion when a pouch-type battery case accommodating the electrode assembly 270 inside is sealed to completely seal the inside of the pouch-type battery case. To this end, the sealant layer may be formed of a material having excellent heat sealing strength.

The sealant layer may be formed of a material having insulation, corrosion resistance, and sealing properties. Specifically, the sealant layer is in direct contact with the electrode assembly 270 and/or electrolyte (not shown) inside the pouch-type battery case, and may thus be formed of a material having insulation and corrosion resistance properties. In addition, the sealant layer is supposed to completely seal the inside of the pouch-type battery case and block material movement between inside and outside, and may thus be formed of a material having high sealing properties (e.g., excellent heat sealing strength). To make sure that such insulation, corrosion resistance, and sealing properties are obtained, the sealant layer may be formed of a polymer material.

Specifically, the sealant layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, nylon, polyester, polyparaphenylene benzobisoxazole, polyarylate, and teflon, and may preferably be formed of polyolefin-based resins such as polypropylene (PP) and/or polyethylene (PE). In this case, the polypropylene may be provided with cast polypropylene (CPP), acid modified polypropylene (PPa), polypropylene-ethylene copolymer, and/or polypropylene-butylene-ethylene terpolymer.

The FIG. 1 is an exploded assembly view of a lithium secondary battery according to the present invention.

The pouch film laminate may be drawn, molded, or stretched by a punch or the like to manufacture the pouch-type battery case. Accordingly, referring to the FIG. 1, the pouch-type battery case may include a cup portion 232 and an accommodation portion 234. The accommodation portion 234 is a place to accommodate the electrode assembly 270, and may indicate a receiving space formed in the shape of a pocket inside the cup portion 232 as the cup portion 232 is formed. The accommodation portion may correspond to the internal space of the battery case accommodating an electrode assembly and an electrolyte.

Meanwhile, the pouch-type battery case may include a first case 230 and a second case 240. The first case 230 may include an accommodation portion 234 capable of accommodating the electrode assembly 270, and the second case 240 may cover the accommodation portion 234 from above to prevent the electrode assembly 270 from being separated to the outside of the battery case. The first case 230 and the second case 240 may be manufactured in a way that one side of the first case 230 and one side of the second case 240 are connected to each other, but the aspect of the present disclosure is not limited thereto, and the first case 230 and the second case 240 may be diversely manufactured, for example, individually manufactured by being separated from each other.

According to another aspect of the present disclosure, when forming the cup portion 242 or 232 in the pouch film laminate, two symmetrical cup portions 232 and 242 may be drawn and molded adjacent to each other in one pouch film laminate. In this case, the cup portions 232 and 242 may each be formed in the first case 230 and the second case 240. After accommodating the electrode assembly 270 in the accommodation portion 234 provided in the cup portion 232 of the first case 230, a bridge portion 250 formed between the two cup portions 232 and 242 may be folded such that the two cup portions 242 face each other. In this case, the cup portion 242 of the second case 240 may accommodate the electrode assembly 270 from above. Accordingly, the two cup portions 232 and 242 accommodate one electrode assembly 270, and thus an electrode assembly 270 that is thicker than when there is only one cup portion may be accommodated. In addition, one edge of a secondary battery is formed by folding the pouch-type battery case, and accordingly, the number of edges to be sealed may be reduced when a sealing process is performed later. Accordingly, process speed of the pouch-type secondary battery 200 may be improved and the number of sealing processes may be reduced.

The pouch-type battery case may be sealed while accommodating the electrode assembly 270 so that a portion of an electrode lead 10, i.e., a terminal portion, is exposed. Specifically, when the electrode lead 10 is connected to an electrode tab 280 of the electrode assembly 270 and a lead film 290 is attached to a portion of the electrode lead 10, the electrode assembly 270 may be accommodated in the accommodation portion 234 provided in the cup portion 232 of the first case 230, and the second case 240 may cover the accommodation portion 234 from above. Then, an electrolyte (not shown) is injected into the accommodation portion 234 and the sealing portion 260 formed on an edge of the first case 230 and the second case 240 may be sealed.

The sealing portion 260 may serve to seal the accommodation portion 234. Specifically, the sealing portion 260 may be formed along an edge of the accommodation portion 234 and may thus seal the accommodation portion 234. The temperature at which the sealing portion 260 is sealed may be 180 °C to 250 °C, specifically 200 °C to 250 °C, and more specifically 210 °C to 240 °C. When the sealing temperature satisfies the numerical range described above, the pouch-type battery case may obtain sufficient sealing strength through heat sealing.

In this case, the sealing portion 260 may be formed by being folded toward the accommodation portion 234 in order to secure the energy density of the lithium secondary battery.

The lithium secondary battery of the present disclosure may have a charge cut-off voltage of 4.3 V or greater, specifically 4.35 V or greater, and more specifically 4.4 V or greater. In this case, excellent energy density equivalent to that of a positive electrode active material with a high nickel content, along with improved high-temperature lifetime performance and high-temperature storage performance is achievable. The capacity of the positive electrode active material is influenced by both the composition of an active material used and driving voltage ranges. For example, even in a lithium nickel cobalt manganese-based oxide having the same transition metal composition, when charge cut-off voltage increases, side reactions with an electrolyte increase during charge and discharge, and a positive electrode active material goes through rapid structural collapse, resulting in rapid degradation in lifetime characteristics. This issue is more prominent in high-nickel lithium nickel cobalt manganese-based oxide having a high nickel content. Therefore, the lithium nickel cobalt manganese-based oxide was typically operated within a voltage range of 2.0 V to 4.3 V when used as a positive electrode active material. However, in the present disclosure, a positive electrode active material has a Ni content of 70 mol% or less and has an EFF index satisfying a specific range, and accordingly, the positive electrode active material may keep excellent lifetime characteristics even when driven at a high voltage with a charge cut-off voltage of 4.3 V or greater.

Meanwhile, the lithium secondary battery may have a nominal voltage of 3.68 V or greater, preferably 3.68 V to 3.80 V, and more preferably 3.69 V to 3.75 V. In this case, the nominal voltage indicates an average voltage value upon discharge of the lithium secondary battery. Since the energy density of the lithium secondary battery is calculated by the product of average voltage and average current upon discharge, energy density increases when the nominal voltage is high. The nominal voltage of a lithium secondary battery using a typical lithium nickel cobalt manganese-based oxide as a positive electrode active material was 3.6 V, but in the present disclosure, the charge cut-off voltage was increased to set the nominal voltage to be 3.68 V or greater so as to achieve high energy density. Specifically, the lithium secondary battery according to the present disclosure may have an energy density of 500 Wh/L or greater, 550 Wh/L or greater, or 500 Wh/L to 800 Wh/L.

The lithium secondary battery according to the present disclosure is useful in portable devices such as a mobile phone, a laptop computer, and a digital camera, and to electric cars such as a hybrid electric vehicle (HEV).

In addition, a battery module or pack including the lithium secondary battery described above as a unit cell may be used as a power source of one or more medium-and-large-sized devices, for example, a power tool, an electric car such as an electric vehicle (EV), a hybrid electric vehicle (HEV), or a plug-in hybrid electric vehicle (PHEV), or a power storage system.

The lithium secondary battery according to the present disclosure may be used in a battery cell which is used as a power source for a small-sized device, and may also be preferably used as a unit cell for a medium- and large-sized battery module including a plurality of battery cells.

Examples of the medium-to-large devices include electric vehicles, hybrid electric vehicles, plug-in hybrid electric vehicles, and energy storage systems (ESS), but are not limited thereto.

Examples and Comparative Examples

Example 1

<Preparation of electrode assembly>

A positive electrode active material, a binder, and a conductive material were mixed in a weight ratio of 97:1.8:2.2 in an N-methylpyrrolidone solvent to prepare a positive electrode slurry. Thereafter, the positive electrode slurry was applied onto one surface of an aluminum current collector having a thickness of 12 $\mu$m, dried, and rolled to prepare a positive electrode. In this case, the positive electrode active material was Li[Ni$_{0.6}$Co$_{0.1}$Mn$_{0.3}$]O$_2$, the binder was polyvinylidene fluoride (PVdF), and the conductive material was carbon nanotubes.

A negative electrode active material, a binder, a conductive material, and an additive were mixed in distilled water in a weight ratio of 96.15:2.3:0.5:1.05 to prepare a negative electrode slurry. Thereafter, the negative electrode slurry was applied onto one surface of a copper current collector having a thickness of 7.8 $\mu$m, dried, and rolled to prepare a negative electrode. In this case, the negative active material was a mixed negative electrode material of artificial graphite and natural graphite, the binder was styrene-butadiene rubber (SBR), the conductive material was Super C65, and the additive was carboxymethyl cellulose (CMC).

A porous polyethylene separator was placed between the negative electrode and positive electrode manufactured above to prepare an electrode assembly.

In this case, the positive electrode had a porosity 21.35% and a loading amount of 4.03 mAh/cm$^2$, and the negative electrode had a porosity of 28.01%. In this case, the positive and negative electrodes were present at an N/P ratio of 107.26, and the electrode assembly had a structure in which 23 bicells, the smallest units having the positive electrode, the separator, and the negative electrode sequentially stacked therein, were stacked.

<Preparation of electrolyte>

1.0 M of LiPF$_6$ was dissolved in a mixed solvent containing ethylene carbonate (EC) and ethyl methyl carbonate (EMC) in a volume ratio of 3:7, and then as additives, 0.5 wt% of vinylene carbonate (VC), 0.5 wt% of propane sultone (PS), 1 wt% of ethylene sulfate (ESa), 1 wt% of lithium difluorophosphate, and 0.2 wt% of LiBF$_4$ were added to prepare an electrolyte.

<Manufacture of lithium secondary battery>

The electrode assembly manufactured as described above was placed inside a pouch-type battery case, and then 90.42 g of the electrolyte manufactured as described above was injected into the case and sealed to manufacture a pouch-type lithium secondary battery.

Example 2

A pouch-type lithium secondary battery was manufactured in the same manner as in Example 1, except that 85.11 g of the prepared electrolyte was injected into the pouch-type battery case.

Example 3

A pouch-type lithium secondary battery was manufactured in the same manner as in Example 1, except that 79.79g of the prepared electrolyte was injected into the pouch-type battery case.

Example 4

A pouch-type lithium secondary battery was manufactured in the same manner as in Example 1, except that an electrode assembly prepared by rolling the positive electrode to have a porosity of 20% and the negative electrode to have a porosity of 27% was applied, and that 85.11 g of the prepared electrolyte was injected into the pouch-type battery case.

Example 5

A pouch-type lithium secondary battery was manufactured in the same manner as in Example 1, except that a mixture of carbon nanotubes and LiSO$_4$ in a weight ratio of 2:1 was used as the positive electrode conductive material, the positive electrode had a porosity of 21% and a loading amount of 4.05 mAh/cm$^2$, the negative electrode had a porosity of 27%, the positive and negative electrodes were present at an N/P ratio of 106, and 85.11 g of the prepared electrolyte was injected into the pouch-type battery case.

Example 6

A pouch-type lithium secondary battery was manufactured in the same manner as in Example 1, except that Li[Ni$_{0.62}$Co$_{0.06}$Mn$_{0.32}$]O$_2$ was used as the positive electrode active material, a mixture of carbon nanotubes and LiSO$_4$ in a weight ratio of 2:1 was used as the positive electrode conductive material, the positive electrode had a porosity of 19.1 and a loading amount of 4.12 mAh/cm$^2$, the negative electrode had a porosity of 26.8, the positive and negative electrodes were present at an N/P ratio of 106, and 95.74g of the prepared electrolyte was injected into the pouch-type battery case.

Example 7

A pouch-type lithium secondary battery was manufactured in the same manner as in Example 1, except that the positive electrode had a porosity of 23.5% and a loading amount of 3.87 mAh/cm$^2$, the negative electrode had a porosity of 29%, the positive and negative electrodes were present at an N/P ratio of 109, and 74.47g of the prepared electrolyte was injected into the pouch-type battery case.

Example 8

A pouch-type lithium secondary battery was manufactured in the same manner as in Example 1, except that, instead of the electrolyte used in Example 1, an electrolyte, which was prepared by dissolving 1.2 M of LiPF$_6$ in an organic solvent containing ethylene carbonate (EC), ethyl methyl carbonate (EMC), and diethyl carbonate (DEC) in a volume ratio of 2:7:1 and then adding, as additives, 0.5 wt% of vinylethylene carbonate (VEC), 0.5 wt% of vinylene carbonate, 0.5 wt% of propane sultone (PS), 1.0 wt% of ethylene sulfate (ESa), 1.0 wt% of lithium difluorophosphate (LiDFP, product name: SLO 7), 0.2 wt% of LiBF$_4$, and 0.1 wt% of propargyl 1Himidazole-1-carboxylate (HS02, CAS 83395-38-4), was used, the positive electrode had a porosity of 19.64% and a loading amount of 3.98 mAh/cm$^2$, the negative electrode had a porosity of 26.55%, the positive and negative electrodes were present at an N/P ratio of 109.1, and 85.11g of the prepared electrolyte was injected into the pouch-type battery case.

Comparative Example 1

A pouch-type lithium secondary battery was manufactured in the same manner as in Example 1, except that 95.74g of the prepared electrolyte was injected into the pouch-type battery case.

Comparative Example 2

A pouch-type lithium secondary battery was manufactured in the same manner as in Example 1, except that 74.47g of the prepared electrolyte was injected into the pouch-type battery case.

Comparative Example 3

A pouch-type lithium secondary battery was manufactured in the same manner as in Example 1, except that Li[Ni$_{0.62}$Co$_{0.06}$Mn$_{0.32}$]O$_2$ was used as the positive electrode active material, the positive electrode loading amount was adjusted to 3.9 mAh/cm$^2$, 22 bicells were stacked to prepare an electrode assembly, and 85.11g of the prepared electrolyte was injected into the pouch-type battery case.

Evaluation of Experimental Example 1 - EFF index

EFF index defined by Equation 1 below was measured for the lithium secondary batteries manufactured in Examples 1 to 8 and Comparative Examples 1 to 3. The results are shown in Table 1 below.

[Equation 1]

$$\mathrm{EFF} = \frac{R_E \times S_U}{N_C}$$

In Equation 1 above, $R_E$ [unit: g] is a mass of residual electrolyte contained in the lithium secondary battery after activation, $S_U$ is a ratio ($S_E/S_C$) of the volume ($S_E$) of the electrode assembly and the volume ($S_C$) of the lithium secondary battery, and $N_C$ [unit: Ah] is a capacity when the lithium secondary battery is discharged from 4.4 V to 3.0 V at 0.33 C at 25 °C.

(1) Measurement of $R_E$

The lithium secondary batteries manufactured in Examples 1 to 8 and Comparative Examples 1 to 3 were each activated by performing (1) charging up to an SOC of 3% under a constant current condition of 0.2 C at 55 °C, (2) charging up to an SOC of 20% under a constant current condition of 1.0 C at 55 °C, and (3) charging up to an SOC of 60% under a constant current condition of 1.0 C at 55 °C.

Then, after the activation, each lithium secondary battery was disassembled and the mass $R_E$ of the residual electrolyte was measured. For each lithium secondary battery, the mass of the residual electrolyte was measured by (1) measuring the mass of the lithium secondary battery after the activation($M_L$) before disassembling the lithium secondary battery, (2) disassembling the lithium secondary battery and removing the electrolyte in the internal space of the battery case, (3) immersing the battery case and the electrode assembly in a dimethyl carbonate as a solvent to remove the electrolyte present on the surface of the battery case, the surface of the electrode assembly, and in the internal pores of the electrode assembly, and then drying the battery case and the electrode assembly, (4) measuring the mass of the dried battery case($M_C$) and the mass of the dried electrode assembly($M_A$), and then substituting the measured $M_L$, $M_C$, and $M_A$ into the Equation A below.

$$[\text{Equation A}]$$

$$R_E = M_L - M_C - M_A$$

The results are shown in Table 1 below.

(2) Measurement of $N_C$

The lithium secondary batteries manufactured in Examples 1 to 8 and Comparative Examples 1 to 3 were charged up to 4.35 V with a 0.05 C cut under constant current/constant voltage conditions of 0.33 C at 25 °C, and then discharged up to 2.0 V under a constant current condition of 0.33 C for activation.
Thereafter, the lithium secondary batteries were charged up to 4.35 V from 3.0 V at a C-rate of 0.33 C at 25 °C, and then capacity $N_C$ when the lithium secondary batteries were discharged to 3.0 V from 4.4 V at 0.33 C at 25 °C was measured. The results are shown in Table 1 below.

(3) Measurement of $S_U$

For each lithium secondary battery manufactured in Examples 1 to 8 and Comparative Examples 1 to 3, $S_U$ was measured by measuring the volume ($S_E$) of the electrode assembly and the volume ($S_C$) of the lithium secondary battery, and calculating the ratio of the $S_E$ and the $S_C$. The $S_E$ and $S_C$ were measured by the following methods, respectively.
The volume $S_E$ of the electrode assembly was obtained according to Equation B below. The volume $S_E$ of the electrode assembly according to Equation B below was obtained by assuming that the electrode assembly accommodated in the pouch-type battery case has a rectangular parallelepiped shape in which the positive electrode, the negative electrode, and the separator are stacked, and the length and width of the electrode assembly are equal to the length and width of the negative electrode, respectively.

$S_E$ = (Thickness of electrode assembly) $\times$ (Length of negative electrode) $\times$ (Width of negative electrode)                    [Equation B]

The volume $S_C$ of the lithium secondary battery was obtained according to Equation C below. The volume $S_C$ of the lithium secondary battery according to Equation C below is obtained by assuming that the lithium secondary battery including the pouch-type battery case has a rectangular parallelepiped shape.

$S_C$ = (Thickness of lithium secondary battery) X (Length of lithium secondary battery) X (Width of lithium secondary battery)                    [Equation C]

In Equation C above, the thickness of the lithium secondary battery is a distance measured along a thickness direction of the lithium secondary battery with respect to an external shape of the lithium secondary battery. The length of the lithium secondary battery is a distance measured along a length direction of the lithium secondary battery with respect to an external shape of the lithium secondary battery. The width of the lithium secondary battery is a distance measured along a width direction of the lithium secondary battery with respect to an external shape of the lithium secondary battery.
The results are shown in Table 1 below.

[Table 1]

|  | $R_E$[g] | $S_U$ | $N_C$[Ah] | EFF Index [g /Ah] |
|---|---|---|---|---|
| Example 1 | 85 | 0.87 | 41.47 | 1. 73 |

(continued)

|  | $R_E$[g] | $S_U$ | $N_C$[Ah] | EFF Index [g /Ah] |
|---|---|---|---|---|
| Example 2 | 80 | 0.87 | 41.47 | 1.63 |
| Example 3 | 75 | 0.87 | 41.47 | 1.53 |
| Example 4 | 80 | 0.86 | 41.47 | 1.66 |
| Example 5 | 80 | 0.87 | 41.68 | 1.67 |
| Example 6 | 90 | 0.85 | 42.5 | 1.8 |
| Example 7 | 70 | 0.88 | 39.82 | 1.55 |
| Example 8 | 80 | 0.85 | 40.95 | 1.66 |
| Comparative Example 1 | 90 | 0.87 | 41.47 | 1. 89 |
| Comparative Example 2 | 70 | 0.87 | 41.47 | 1.47 |
| Comparative Example 3 | 80 | 0.76 | 40.12 | 1.515 |

Experimental Example 2: Evaluation of lifespan at high temperature

The lithium secondary batteries of Examples 1 to 8 and Comparative Examples 1 to 3 were charged up to an SOC of 100% under CC/CV conditions of 0.33 C at 25 °C, and then stored at 60 °C for 28 weeks to measure capacity retention and resistance increase rate of each lithium secondary battery. A specific measurement method is as follows.

(1) Capacity retention

Each lithium secondary battery was stored at 60 °C for 28 weeks and then charged to 4.35 V, with a 0.05 C cut under CC/CV conditions of 0.33 C at 25 °C and discharged up to 2.0 V under a CC condition of 0.33 C to measure capacity upon discharge.

The capacity retention was evaluated according to the Equation below, and the results are shown in Table 2 below.

Capacity retention (%)=(discharge capacity upon storage for 28 weeks at 60 °C/initial discharge capacity)×100

(2) Resistance increase rate

Before storing the lithium secondary batteries at 60 °C, the lithium secondary batteries were charged up to an SOC of 100 under CC/CV conditions of 0.33 C at 25 °C, and then capacity at room temperature was determined, and the lithium secondary batteries were charged to an SOC of 50% with respect to discharge capacity, discharged for 30 seconds at a current of 2.5 C to measure resistance using the voltage drop difference at this point as an initial resistance, and were stored at 60 °C for 28 weeks to measure resistance in the same manner as a final resistance, thereby calculating resistance increase rate using Equation below. The results are shown in Table 2 below.

Resistance increase rate (%) = (final resistance - initial resistance) / (initial resistance) × 100

[Table 2]

|  | Capacity retention [%] | Resistance increase rate[%] |
|---|---|---|
| Example 1 | 93.58 | 30.84 |
| Example 2 | 93.33 | 35.51 |
| Example 3 | 93.57 | 38.15 |
| Example 4 | 93.41 | 32.46 |
| Example 5 | 92.94 | 37.26 |
| Example 6 | 93.31 | 35.20 |
| Example 7 | 93.31 | 34.98 |

(continued)

|  | Capacity retention [%] | Resistance increase rate[%] |
|---|---|---|
| Example 8 | 93.12 | 37.59 |
| Comparative Example 1 | 92.83 | 38.16 |
| Comparative Example 2 | 92.30 | 52.56 |
| Comparative Example 3 | 91.91 | 56.68 |

Referring to Table 2 above, the lithium secondary batteries manufactured in Examples 1 to 8 were found to be superior to the lithium secondary batteries manufactured in Comparative Examples 1 to 3 in capacity retention and resistance increase rate after 28 weeks of storage at 60 °C.

(Description of Symbols)

10: Electrode lead
20: Positive electrode lead
30: Negative electrode lead
230: First case
232: Cup portion
234: Accommodation portion
240: Second case
242: Cup portion
250: Bridge portion
260: Sealing portion
270: Electrode assembly
280: Electrode tab
282: Positive electrode tab
284: Negative electrode tab
290: Lead film

## Claims

1. A lithium secondary battery comprising:

    an electrode assembly comprising a positive electrode, a negative electrode, and a separator between the positive electrode and the negative electrode;
    an electrolyte; and
    a battery case comprising an internal space configured to accommodate the electrode assembly and the electrolyte,
    wherein the positive electrode comprises a positive electrode active material,
    wherein the positive electrode active material comprises a lithium nickel-based oxide containing 50 mol% to 70 mol% nickel among all metals excluding lithium, and
    wherein an electrolyte filling factor (EFF) index (unit: g/Ah) defined by Equation 1 is 1.52 to 1.88,

$$[\text{Equation 1}]$$

$$\text{EFF} = \frac{R_E \times S_U}{N_C}$$

    wherein in Equation 1,
    $R_E$ (unit: g) is a mass of the residual electrolyte contained in the lithium secondary battery after activation of the lithium secondary battery,
    $S_U$ is a ratio ($S_E/S_C$) of a volume ($S_E$) of the electrode assembly and a volume ($S_C$) of the lithium secondary battery, and

$N_C$ (unit: Ah) is a capacity when the lithium secondary battery is discharged from 4.4 V to 3.0 V at 0.33 C at 25 °C.

2. The lithium secondary battery of claim 1, wherein $R_E$ is 70 to 90 g.

3. The lithium secondary battery of claim 1, wherein $S_U$ is 0.75 to 0.95.

4. The lithium secondary battery of claim 1, wherein $N_C$ is 35 to 50 Ah.

5. The lithium secondary battery of claim 1, wherein the lithium nickel-based compound contains 15 mol% of cobalt (Co) or less among all metals except lithium.

6. The lithium secondary battery of claim 1, wherein the lithium nickel-based oxide is represented by Formula 1:

$$[\text{Formula 1}] \qquad Li_{1+a1}[Ni_{x1}Co_{y1}Mn_{z1}M^1_{w1}]O_2$$

wherein in Formula 1,

$0\leq a1\leq 0.5$, $0.5\leq x1\leq 0.7$, $0<y1\leq 0.15$, $0<z1\leq 0.4$, and $0\leq w1\leq 0.2$ are satisfied, and

$M^1$ is at least one doping element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo.

7. The lithium secondary battery of claim 1, wherein the lithium nickel-based oxide is a single particle type particle.

8. The lithium secondary battery of claim 1, wherein the lithium secondary battery has a charge cut-off voltage of 4.3 V or greater.

9. The lithium secondary battery of claim 1, wherein the negative electrode comprises graphite as a negative electrode active material.

10. The lithium secondary battery of claim 1, wherein the battery case is a pouch-type battery case.

11. The lithium secondary battery of claim 1, wherein a ratio of $R_E$ to $N_C$ (unit: g/Ah) is 1.5 to 3.

12. The lithium secondary battery of claim 1, wherein the volume ($S_E$) of the electrode assembly is from 0.17 L to 1.1 L.

13. The lithium secondary battery of claim 1, wherein the volume ($S_C$) of the lithium secondary battery is from 0.23 L to 1.2 L.

14. The lithium secondary battery of claim 1, wherein the electrolyte comprises an organic solvent and a lithium salt, and a concentration of the lithium salt is 0.1 M to 3.0 M.

15. The lithium secondary battery of claim 1, wherein the lithium secondary battery has a nominal voltage of 3.68 V or greater.

16. A battery pack comprising the lithium secondary battery of any one of claims 1 to 15.

17. An electric vehicle comprising the battery pack of claim 16 as a power source.

[FIG. 1]

<h1 style="text-align:center">INTERNATIONAL SEARCH REPORT</h1>

| International application No. |
|---|
| **PCT/KR2024/020864** |

| A. | CLASSIFICATION OF SUBJECT MATTER |
|---|---|

**H01M 10/058**(2010.01)i; **H01M 4/505**(2010.01)i; **H01M 4/525**(2010.01)i; **H01M 4/587**(2010.01)i; **H01M 50/105**(2021.01)i; **H01M 10/44**(2006.01)i; **C30B 29/22**(2006.01)i

According to International Patent Classification (IPC) or to both national classification and IPC

| B. | FIELDS SEARCHED |
|---|---|

Minimum documentation searched (classification system followed by classification symbols)

H01M 10/058(2010.01); C01G 53/00(2006.01); H01M 4/36(2006.01); H01M 4/38(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지 (lithium secondary battery), 니켈 (nickel), 전해액 충전 지수 (EFF, electrolyte filling factor), 활성화 (activation, formation), 부피 (volume)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 7027626 B2 (LG ENERGY SOLUTION LTD.) 02 March 2022 (2022-03-02)<br>See paragraphs [0141] and [0172]. | 1-17 |
| A | JP 2023-539171 A (LG ENERGY SOLUTION LTD.) 13 September 2023 (2023-09-13)<br>See paragraphs [0098] and [0114]. | 1-17 |
| A | JP 7114148 B2 (LG ENERGY SOLUTION LTD.) 08 August 2022 (2022-08-08)<br>See paragraphs [0097] and [0115]. | 1-17 |
| A | JP 7214299 B2 (LG ENERGY SOLUTION LTD.) 30 January 2023 (2023-01-30)<br>See paragraphs [0090] and [0108]. | 1-17 |
| A | JP 7309258 B2 (LG ENERGY SOLUTION LTD.) 18 July 2023 (2023-07-18)<br>See paragraphs [0081] and [0116]. | 1-17 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 March 2025** | **25 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/020864**

| Patent document cited in search report | | | Publication date (day/month/year) | Patent family member(s) | | | Publication date (day/month/year) |
|---|---|---|---|---|---|---|---|
| JP | 7027626 | B2 | 02 March 2022 | CN | 107925056 | A | 17 April 2018 |
| | | | | CN | 107925056 | B | 23 July 2021 |
| | | | | EP | 3319151 | A1 | 09 May 2018 |
| | | | | EP | 3319151 | B1 | 06 March 2019 |
| | | | | JP | 2018-535520 | A | 29 November 2018 |
| | | | | JP | 2021-007109 | A | 21 January 2021 |
| | | | | JP | 7062157 | B2 | 06 May 2022 |
| | | | | KR | 10-2017-0069153 | A | 20 June 2017 |
| | | | | KR | 10-2101006 | B1 | 14 April 2020 |
| | | | | US | 11171322 | B2 | 09 November 2021 |
| | | | | US | 2018-0219212 | A1 | 02 August 2018 |
| | | | | WO | 2017-099481 | A1 | 15 June 2017 |
| JP | 2023-539171 | A | 13 September 2023 | CN | 115917795 | A | 04 April 2023 |
| | | | | EP | 4184611 | A1 | 24 May 2023 |
| | | | | KR | 10-2022-0029521 | A | 08 March 2022 |
| | | | | US | 2023-0343936 | A1 | 26 October 2023 |
| | | | | WO | 2022-050664 | A1 | 10 March 2022 |
| JP | 7114148 | B2 | 08 August 2022 | CN | 108140829 | A | 08 June 2018 |
| | | | | CN | 108140829 | B | 18 June 2021 |
| | | | | EP | 3386015 | A1 | 10 October 2018 |
| | | | | EP | 3386015 | B1 | 19 February 2025 |
| | | | | JP | 2018-532236 | A | 01 November 2018 |
| | | | | KR | 10-1989399 | B1 | 17 June 2019 |
| | | | | KR | 10-2017-0063408 | A | 08 June 2017 |
| | | | | US | 11081694 | B2 | 03 August 2021 |
| | | | | US | 11581538 | B2 | 14 February 2023 |
| | | | | US | 2018-0261842 | A1 | 13 September 2018 |
| | | | | US | 2021-0313573 | A1 | 07 October 2021 |
| | | | | WO | 2017-095153 | A1 | 08 June 2017 |
| JP | 7214299 | B2 | 30 January 2023 | CN | 113646930 | A | 12 November 2021 |
| | | | | CN | 113646930 | B | 13 September 2024 |
| | | | | EP | 3869595 | A1 | 25 August 2021 |
| | | | | JP | 2022-510653 | A | 27 January 2022 |
| | | | | KR | 10-2020-0067009 | A | 11 June 2020 |
| | | | | KR | 10-2533811 | B1 | 19 May 2023 |
| | | | | US | 12046750 | B2 | 23 July 2024 |
| | | | | US | 2022-0020983 | A1 | 20 January 2022 |
| | | | | WO | 2020-116858 | A1 | 11 June 2020 |
| JP | 7309258 | B2 | 18 July 2023 | CN | 114051666 | A | 15 February 2022 |
| | | | | CN | 114051666 | B | 16 April 2024 |
| | | | | EP | 3975305 | A1 | 30 March 2022 |
| | | | | JP | 2022-531337 | A | 06 July 2022 |
| | | | | KR | 10-2021-0011245 | A | 01 February 2021 |
| | | | | US | 2022-0255150 | A1 | 11 August 2022 |
| | | | | WO | 2021-015488 | A1 | 28 January 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230190416

- KR 1020240190568

**Non-patent literature cited in the description**

- *CHEMICAL ABSTRACTS*, 83395-38-4